# EUROPÄISCHE PATENTANMELDUNG

(11) **EP 2 108 628 A1**
(43) Veröffentlichungstag der Anmeldung: **14.10.2009**
(21) Anmeldenummer: 08007106.1
(22) Anmeldetag: 10.04.2008
(51) Int. Cl.: C04B 24/04, C04B 24/12, C04B 40/00, C04B 103/20

(54) **Abbindeverzögerer für hydraulisch abbindende Zusammensetzungen**

(71) Anmelder: TRICOSAL GmbH & Co. KG, 89257 Illertissen (DE)
(72) Erfinder: Winkler, Maria, 87727 Babenhausen (DE); Etschmann, Franz, 89257 Illertissen (DE)
(74) Vertreter: Pfenning, Meinig & Partner GbR

(57) **Zusammenfassung**

Die vorliegende Erfindung betrifft einen Abbindeverzögerer für hydraulisch abbindende Zusammensetzungen, enthaltend mindestens ein zumindest einfaches Addukt und/oder Kondensat, herstellbar durch Reaktion mindestens eines Proteinhydrolysats, einer reinen Aminosäure, Aminosäuregemischen und/oder deren Hydrochloriden mit mindestens einer Mono-, Di-, Oligo- und/oder Polycarbonsäure, die nicht von einer Aminosäure abgeleitet ist und/oder davon abgeleitete Carbonsäurederivate, wobei das Carbonsäurederivat ausgewählt ist aus der Gruppe bestehend aus Carbonsäureanhydriden, Carbonsäurehalogeniden und/oder Carbonsäureaktivestern.

## Beschreibung

Vorliegende Erfindung betrifft einen Abbindeverzögerer für hydraulisch abbindende Zusammensetzungen, ein Verfahren zu dessen Herstellung sowie Verwendungszwecke des Abbindeverzögerers. Der erfindungsgemäße Abbindeverzögerer zeichnet sich durch eine exzellente Verzögerungswirkung bei einer Vielzahl von hydraulisch abbindenden Zusammensetzungen aus.

Im Baugewerbe und in der Bildhauerei werden große Mengen an Gipsmassen eingesetzt. Dabei wird gebrannter Gips oder Stuckgips entweder alleine oder in Mischung mit Kalk, Sand und Leichtzuschlagstoffen, wie Perlit oder Cellulosederivaten in größerem Umfang verwendet. Die Abbindezeit der Gipsmassen nach dem Anrühren mit Wasser ist jedoch relativ kurz, so dass eine schnelle Verarbeitung erfolgen muss. Eine Übersicht hierzu findet sich beispielsweise von Ruffer in und nicht exakt; siehe in Hans-Bertram Fischer, Martin Werner: Hydratationsverhalten von Gipsmischungen, Stuck, Putz, Trockenbau, 9194 S. 16-22), sowie nach der Vicat-Methode, DIN 1168 Teil 2 oder mit Hilfe von Ultraschallmessungen, in Con. Chem - Journal, 4 Jahrgang 3196.

Geeignete Abbindeverzögerer schieben also den Versteifungsbeginn hinaus bzw. erhöhen die Zeitdifferenz zwischen VE und VB. Derartige Verzögerer sind beispielsweise Kolloidbildner (Celluloseether, Casein, Dextrin) oder amphoter wirkende anorganische Verbindungen (Zink- und Bleioxid) und vor allem Komplexbildner für Calcium bzw. solche, die mit Calcium schwerlösliche Verbindungen bilden, z.B. Phosphate, Phosphonate, Silikonfluoride, Borsäure, Borate, Weinsäure, Gluconsäure, Heptonsäure, Zitronensäure, Gallussäure, Saccharose, Glucose, Fructose, Äpfelsäure. Der Reproduzierbarkeit wegen, vor allem aber aus Preisgründen, haben in der Praxis fast nur Fruchtsäuren als Verzögerer Verwendung gefunden. Als Abbindeverzögerer für Gips wird zur Zeit hauptsächlich Weinsäure eingesetzt.

Die mit Weinsäure verarbeiteten Gipse zeigen typischerweise einen flachen Abbindeverlauf und eine große Differenz zwischen VE-VB, was den Bedürfnissen des Anwenders sehr entgegenkommt. Nachteilig ist allerdings die gegenüber polymeren Elektrolyten geringe Verzögerungswirkung hinsichtlich VB. Ein naheliegender Weinsäureersatzstoff - die Zitronensäure- ergibt bei der maschinengerechten Applikation häufig Abbindestörungen und daraus resultierende Reklamationen.

In der DE 199 14 367 wird eine wasserbeständige hydraulisch abbindende Zusammensetzung offenbart, die Amidobetaine, Ethercarbonsäuren und Alkylbetaine als Hilfsstoffe enthält. Als sog. hydraulisch abbindende Zusammensetzung wird auf Seite 4, Z. 55 ff. auch Gips in Form von Halbhydrat und Anhydrit genannt.

In der DE 197 40 787 A1 wird ein Verfahren zur Verbesserung der Plastizität von keramischen Massen offenbart, wobei jedoch ebenfalls die oben genannten Unzulänglichkeiten zu beobachten sind.

JP 08 169 741 A offenbart die Verwendung von Polysuccinimid in Zement; auch hier ist jedoch eine optimale Zeitdifferenz zwischen VB-VE nicht gegeben.

WO 92/16463 A1 offenbart ein Verfahren zur Verhinderung der Ausfällung von Calciumsulfat in wässrigen Systemen unter Verwendung von Polyasparaginsäure. Die Verwendung von polymeren wiederkehrenden Succinyleinheiten zur Abbindeverzögerung von Calciumsulfat beta-Halbhydrat oder dessen Zubereitungen ist zwar prinzipiell möglich, allerdings resultiert hier ein sehr kurzes Verarbeitungsintervall.

Aus Zement, Kalk und Gips International, Nr. 911999 ist es bekannt, die dimere Verbindung, Imidodisuccinat bzw. das Natriumsalz Na-IDS gemäß der dort angegebenen Formel als Verzögerer für Maschinenputzgipse einzusetzen. Diese Verbindung hat sehr gute Eigenschaften in Bezug auf die Abbindung des Gipses. Der Nachteil bei der Verwendung dieser Verbindung besteht jedoch darin, dass sie zwar sehr gut die Abbindung verzögert, jedoch ein sehr kurzes Verarbeitungsintervall zeigt. Als Verarbeitungsintervall wird die Zeit zwischen Abbindeanfang und Abbindeende genannt. Nur durch Zusatz des bekannten Verzögerers der Weinsäure in Mengen von 0,03 bis 0,04 Gew.-% zum Imidodisuccinat kann dieses Intervall ausgeweitet werden.

Ausgehend von den Nachteilen des Standes der Technik war es daher Aufgabe der vorliegenden Erfindung, einen Abbindeverzögerer für hydraulisch abbindende Zusammensetzungen bereitzustellen, der bei einer Vielzahl von hydraulisch abbindenden Zusammensetzungen eine optimale Einstellung zwischen Versteifungsbeginn und Versteifungsende ermöglicht. Ebenso war es Aufgabe der vorliegenden Erfindung, ein verbessertes, einfaches Verfahren zur Herstellung eines Abbindeverzögerers anzugeben, das den entsprechenden Abbindeverzögerer in hohen Ausbeuten erhältlich werden lässt.

Diese Aufgabe wird bezüglich des Abbindeverzögerers mit den Merkmalen des Patentanspruchs 1, bezüglich des Verfahrens zur Herstellung des Abbindeverzögerers mit den Merkmalen des Patentanspruchs 8 gelöst. Mit Patentanspruch 13 werden Verwendungsmöglichkeiten des Abbindeverzögerers genannt. Die jeweiligen abhängigen Ansprüche stellen dabei vorteilhafte Weiterbildungen dar.

Erfindungsgemäß wird ein Abbindeverzögerer für hydraulisch abbindende Zusammensetzungen bereitgestellt, enthaltend mindestens ein zumindest einfaches Addukt und/oder Kondensat, herstellbar durch Reaktion mindestens eines Proteinhydrolysats, einer reinen Aminosäure, Aminosäuregemischen und/oder deren Hydrochloriden mit mindestens einer Mono-, Di-, Oligo- und/oder Polycarbonsäure, die nicht von einer Aminosäure abgeleitet ist und/oder davon abgeleitete Carbonsäurederivate, wobei das Carbonsäurederivat ausgewählt ist aus der Gruppe bestehend aus Carbonsäureanhydriden, Carbonsäurehalogeniden und/oder Carbonsäureaktivestern. Der Abbindeverzögerer enthält somit ein zuvor genanntes Addukt als Reinstoff oder aber Mischungen mehrerer Addukte.

Einfache Addukte können z.B. das Reaktionsprodukt aus einer Aminosäure mit einer NH₂-Funktionalität mit 1 Äquivalent einer Säure bzw. einem oben definierten Derivat darstellen, wobei eine Amidbindung gebildet wird. Entsprechendes gilt für die weiteren nukleophilen Funktionalitäten, die bei Aminosäuren auftreten, wie z.B. -OH- und -SH-Funktionalitäten, wobei sich entsprechend Ester- bzw. Thioestergruppierungen bilden. Ebenso ist die entsprechende Umsetzung aus einem Proteinhydrolysat mit einem Äquivalent einer Säure bzw. Derivaten davon zu verstehen. Mehrfache Addukte, also mindestens zwei-, drei- vierfache usw. Addukte ergeben sich dann, wenn entweder eine Aminosäure oder ein Proteinhydrolysat mit 2 oder mehr nukleophilen Funktionalitäten, wie z.B. Amino-, Hydroxy und/oder Thiol-Gruppen, verwendet wird und/oder eine mehrwertige Carbonsäure, also eine Di-, Tri-, Oligo-Carbonsäure usw. eingesetzt wird.

Die Addukte und/oder Kondensate können im erfindungsgemäßen Abbindeverzögerer als Reinstoffe oder als Mischung enthalten sein. Mischungen sind dabei so zu verstehen, dass Addukte aus verschiedenen Stoffen (z.B. verschiedene Aminosäuren und/oder Carbonsäuren) und/oder ein- und mehrfache Addukte aus den gleichen Stoffen in Mischung miteinander vorliegen können.

Als Proteinhydrolysate können dabei z.B. durch enzymatischen Abbau von Protein hergestellte Hydrolysate, aber auch chemisch hergestellte Proteinhydrolysate, z.B. durch Verseifung hergestellte Proteinhydrolysate zum Einsatz kommen.

Bevorzugt ist es, wenn die mindestens eine Aminosäure ausgewählt ist aus der Gruppe bestehend aus Alanin, Arginin, Asparagin, Asparaginsäure, Cystein, Glutamin, Glutaminsäure, Glycin, Histidin, Isoleucin, Leucin, Lysin, Methionin, Phenylalanin, Prolin, Serin, Threonin, Tryptophan, Tyrosin, Valin und/oder Aminobutansäure. Ebenso können jedoch auch die Hydrochloride der zuvor genannten Aminosäuren, wie beispielsweise Lysinhydrochlorid, verwendet werden.

Für die Säurekomponente ist es bevorzugt, wenn die Mono-, Di-, Oligo- und/oder Polycarbonsäure und/oder das Carbonsäurederivat ausgewählt ist aus der Gruppe bestehend aus Oxalsäure, Essigsäure, Propionsäure, 1,3-Propiondisäure, Butansäure, Bernsteinsäure, Maleinsäure, Fumarsäure, Phthalsäure, Pyromellitsäure, Äpfelsäure, Weinsäure, Zitronensäure und/oder deren Säurehalogeniden, Säureanhydriden und/oder Aktivestern der genannten Verbindungen, insbesondere ist Bernsteinsäureanhydrid hier bevorzugt.

In einer weiteren vorteilhaften Ausführungsform zeichnet sich das Addukt und/oder Kondensat, das im Abbindeverzögerer enthalten ist, durch die allgemeine Formel I aus:

Z-Y-(R³)_{c}-(CHR¹)ₐ-(CHR²)_{b}-Y-Z Formel I

wobei jeweils unabhängig voneinander
- R¹: Wasserstoff oder einen linearen oder verzweigten C₁-C₁₂-Alkylrest,
- R²: -COOX und/oder -SO₃X, mit X = H, Li, Na, K, ½Mg, ½Ca, ½Zn,
- R³: einen zweiwertigen aromatischen Rest, der ortho, meta oder parasubstituiert ist und 6 bis 18 Kohlenstoffatome aufweist oder ein Rest der Formel II 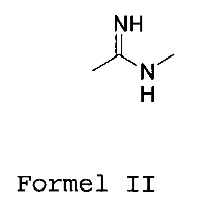 wobei das iminische Kohlenstoffatom (-C=N) an die Gruppierung Y gemäß Formel I gebunden ist,
a 1 bis 12,
b 0 bis 10
c 0 oder 1,
- Y: NR¹, S oder O, wobei R¹ die oben angegebene Bedeutung hat, sowie
- Z: -C(=O)-(CHR¹)_{d}-COOX, wobei R¹ und X die oben angegebene Bedeutung besitzen und d 0 bis 12 ist, bedeuten.

Die Verbindung gemäß Formel I stellt somit z.B. ein zweifaches Addukt einer Aminosäure mit zwei Aminofunktionalitäten und zwei Äquivalenten einer Carbonsäure mit zwei Säurefunktinoalitäten oder einem internen Carbonsäureanhydrid dar.

Ebenso ist es bevorzugt, wenn der Abbindeverzögerer als Mischung des zuvor beschriebenen zweifachen Adduktes der Formel I mit mindestens einem einfachen Addukt gemäß einer Formel der Formeln III und/oder IV vorliegt:

HY-(R³)_{c}-(CHR¹)ₐ-(CHR²)_{b}-Y-Z Formel I

Z-Y-(R³)_{c}-(CHR¹)ₐ-(CHR²)_{b}-YH Formel IV

wobei R^{1,} R², R³, a, b, c, Y und Z die oben genannte Bedeutung haben.

Die einfachen Addukte und/oder Kondensate gemäß den Formeln III und IV stellen somit ein Reaktionsprodukt z.B. einer Aminosäure mit zwei Aminofunktionalitäten mit einem Äquivalent einer Carbonsäure mit zwei Carbonsäurefunktionalitäten und/oder eines inneren Carbonsäureanhydrids dar.

Insbesondere ergeben sich gute Abbindeverzögerer, wenn R¹ = H; a = 2-6, insbesondere 4; R² = COOX; b = 1; c = 0; d = 1-6, insbesondere 2 sowie Y = NH ist.

Der Abbindeverzögerer kann in wässriger Lösung oder in trockener Pulverform vorliegen. Bevorzugte Konzentrationsbereiche der wässrigen Lösung des Abbindeverzögerers liegen dabei zwischen 15 bis 50 Gew.-%, bevorzugt zwischen 15 bis 40 Gew.-%, besonders bevorzugt zwischen 30 bis 40 Gew.-%.

Vorteilhafte pH-Werte der wässrigen Lösung des Abbindeverzögerers betragen zwischen 2 und 13, bevorzugt zwischen 4 und 10, besonders bevorzugt zwischen 6 und 8.

In einer weiteren vorteilhaften Ausführungsform kann der Abbindeverzögerer mindestens einen Zusatzstoff, ausgewählt aus der Gruppe bestehend aus Rheologiehilfsmitteln, Lösemitteln, Entschäumern, Beschleunigern, Füllstoffen, Trockenstoffen, Farbstoffen, Konservierungsmitteln, Rostschutzmitteln, Hydrophobierungsmitteln oder Pigmenten, oder ein Gemisch aus zwei oder mehr daraus ausgewählten Zusatzstoffen davon, enthalten.

Bevorzugt beträgt der Gewichtsanteil des mindestens einen Zusatzstoffes bezogen auf 100 Gew.-% Abbindeverzögerer zwischen 0,1 und 30 Gew.-%, bevorzugt zwischen 0,3 und 10 Gew.-%.

Erfindungsgemäß wird ebenso ein Verfahren zur Herstellung eines im Voranstehenden definierten Abbindeverzögerers bereitgestellt, bei dem
a) mindestens ein Proteinhydrolysat, eine reine Aminosäure, ein Aminosäuregemisch und/oder deren Hydrochloride, bevorzugt Lysin, Lysinhydrochlorid und/oder Threonin mit
b) mindestens einer Mono-, Di-, Oligo- und/oder Polycarbonsäure, die nicht von einer Aminosäure abgeleitet ist und/oder davon abgeleiteten Carbonsäurederivaten, wobei das Carbonsäurederivat ausgewählt ist aus der Gruppe bestehend aus Carbonsäureanhydriden, Carbonsäurehalogeniden und/oder Carbonsäureaktivestern, bevorzugt Bernsteinsäureanhydrid,
in wässriger Lösung gemischt und zur Reaktion gebracht wird.

Bevorzugt ist es hierbei, wenn dem Reaktionsgemisch mindestens eine Lauge, bevorzugt Natronlauge, Kalilauge, Kalkmilch, Löschkalk und/oder Branntkalk vor, während und/oder nach Mischen der Komponenten a) und b) zugegeben wird.

In einer vorteilhaften Ausführungsform des Verfahrens werden die beiden Edukte a) und b) in einem Äquivalenzverhältnis zwischen 1:10 und 10:1, bevorzugt zwischen 1:3 und 3:1 eingesetzt, wobei die Äquivalenz des Eduktes a) auf freie -NH₂-Gruppen und die Äquivalenz des Eduktes b) auf freie oder derivatisierte Carbonsäurefunktionalitäten bezogen ist.

Nach abgeschlossener Reaktion kann das erhaltene Produkt bevorzugt durch Zugabe mindestens einer Alkalie, bevorzugt einer Alkalie ausgewählt aus der Gruppe bestehend aus Calciumhydroxid, Calciumoxid, Kaliumhydroxid und/oder Natriumhydroxid ausgesalzt werden.

Erfindungsgemäß wird somit der Abbindeverzögerer in wässriger Lösung hergestellt. Nach Abschluss der Reaktion kann die erhaltene wässrige Lösung des Abbindeverzögerers somit unmittelbar zum Einsatz gebracht werden. Es ist jedoch ebenso vorteilhaft, wenn nach Abschluss der Reaktion eine Trocknung des Reaktionsgemisches, bevorzugt eine Sprühtrocknung durchgeführt wird, wobei der Abbindeverzögerer somit entweder als konzentrierte wässrige Lösung, als Paste oder als trockenes Pulver erhalten wird.

Bei Durchführung einer Sprühtrocknung ist zu bevorzugen, dass vor und/oder während der Sprühtrocknung mindestens ein Sprühhilfsstoff, bevorzugt ausgewählt aus der Gruppe bestehend aus Kalksteinmehl, Ligninsulfonat, Talkum, Kieselsäure, Polyacrylaten und/oder Polyvinylalkoholen zugesetzt wird.

Erfindungsgemäß werden ebenso Verwendungsmöglichkeiten des Abbindeverzögerers genannt. Der Abbindeverzögerer eignet sich insbesondere zur Verzögerung des Abbindens einer hydraulisch abbindenden Zusammensetzung, wobei der Abbindeverzögerer vor, während und/oder nach Anmachen der hydraulischen abbindenden Zusammensetzung dieser zugesetzt wird.

Die hydraulisch abbindende Zusammensetzung enthält dabei zumindest eine anorganische Substanz, die nach Anmachen mit Hydratationswasser nach einem gewissen Zeitraum aushärtet. Insbesondere ist die anorganische Substanz dabei ausgewählt aus der Gruppe bestehend aus Zement, hydraulischem Kalk, Gips, Gips-Putze, -Spachtel, -Mörtel, -Estriche und/oder Mischungen hieraus.

Eine wichtige Verwendung des Abbindeverzögerers für Gipse sind insbesondere Gipsplatten.

Es ist bevorzugt, wenn 100 Gew.-% der hydraulisch abbindenden Zusammensetzung (als Trockensubstanz) 0,001 bis 0,5 Gew.-%, bevorzugt 0,001 bis 0,1 Gew.-% des Abbindeverzögerers (bezogen auf die Trockensubstanz des Abbindeverzögerers) zugesetzt werden.

Im Nachfolgenden wird beispielhaft die Herstellung eines erfindungsgemäß zu bevorzugenden Abbindeverzögerers beschrieben, wobei die Ausführungen lediglich beispielhafter Natur und zur Verdeutlichung der Erfindung gedacht sind. Die Erfindung ist in keinem Fall auf die speziell im folgenden Beispiel verwendeten Parameter zu beschränken.

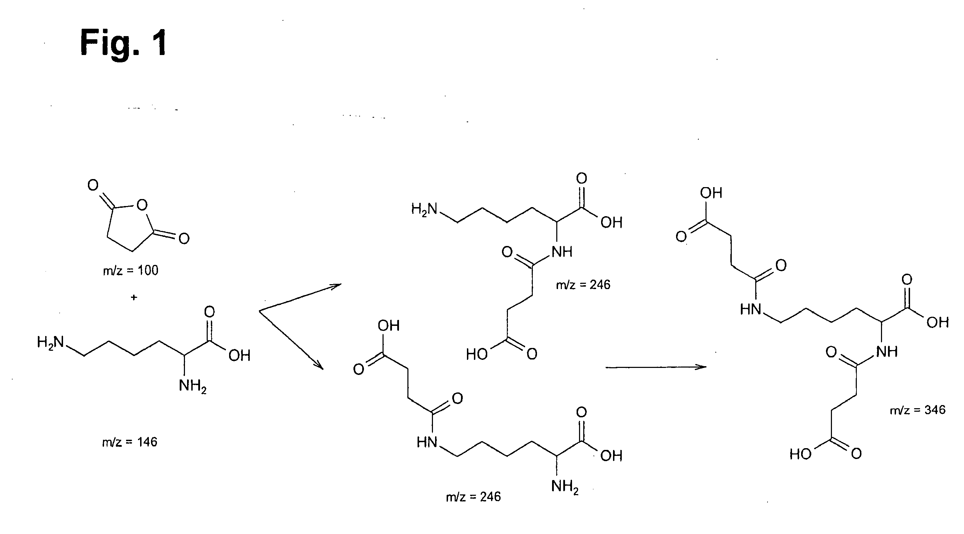

Bei der in Abb. 1 dargestellten Reaktion kommt es unter Wasserabspaltung zur Bildung von verschiedenen Amiden. Beide Aminogruppen des Lysins reagieren mit 1 Mol Bernsteinsäure zu zwei isomeren Molekülen, die im ESI-Massenspektrum nicht unterscheidbar sind, wohl aber in den NMR-Spektren. Durch Addition von 2 Mol Bernsteinsäure entsteht ein weiteres Molekül. Ausgangsverbindungen und die drei Reaktionsprodukte liegen in einer Mischung vor. Die Reaktion kann durch Einsatz eines Überschusses an BSA auch so gesteuert werden, dass im Wesentlichen nur das zweifache Addukt vorliegt. Die Synthese der erfindungsgemäßen Abbindeverzögerer kann auf vielfältige Weise erfolgen, wie dies anhand der folgenden bevorzugten Reaktionssequenzen verdeutlicht wird.

### Herstellverfahren 1

1) Vorlegen von Wasser
2) Zugabe einer Aminosäure und/oder Eiweißhydrolysat und/oder Aminosäuregemisch
3) Zugabe von Säureanhydrid (ggf. leicht erwärmen, z.B. auf eine Temperatur zwischen 30 bis 80 °C, oder kühlen wenn zu viel Neutralisationswärme entsteht)
4) Abschließende Konservierung

Der pH-Wert des Endprodukts beträgt dabei 2 bis 13, bevorzugt 4 bis 10, besonders bevorzugt 6 bis 8 (neutralisiert mit Lauge)

### Herstellverfahren 2

1) Vorlegen von Wasser
2) Zugabe einer Lauge
3) Zugabe einer Aminosäure und/oder Eiweißhydrolysat und/oder Aminosäuregemisch
4) Zugabe von Säureanhydrid (ggf. noch etwas erwärmen, z.B. auf eine Temperatur zwischen 30 und 80 °C, oder kühlen wenn zu viel Neutralisationswärme entsteht)
5) Abschließende Konservierung

Der pH-Wert des Endprodukts beträgt dabei 2 bis 13, bevorzugt 4 bis 10, besonders bevorzugt 6 bis 8 (neutralisiert mit Lauge)

### Herstellverfahren 3

1) Vorlegen von Wasser
2) Zugabe einer Aminosäure und/oder Eiweißhydrolysat und/oder Aminosäuregemisch
3) Zugabe einer Lauge
4) Zugabe von Säureanhydrid (ggf. noch etwas erwärmen, z.B. auf eine Temperatur zwischen 30 bis 80 °C, oder kühlen wenn zu viel Neutralisationswärme entsteht)
5) Abschließende Konservierung

Der pH-Wert des Endprodukts beträgt dabei 2 bis 13, bevorzugt 4 bis 10, besonders bevorzugt 6 bis 8 (neutralisiert mit Lauge)

### Herstellverfahren 4

1) Vorlegen von Wasser
2) Zugabe einer Aminosäure und/oder Eiweißhydrolysat und/oder Aminosäuregemisch
3) Zugabe von Säureanhydrid (ggf. noch etwas erwärmen, z.B. auf eine Temperatur zwischen 30 bis 80 °C, oder kühlen wenn zu viel Neutralisationswärme entsteht)
4) Zugabe einer Lauge
5) Abschließende Konservierung

Der pH-Wert des Endprodukts beträgt dabei 2 bis 13, bevorzugt 4 bis 10, besonders bevorzugt 6 bis 8 (neutralisiert mit Lauge)

### Chemische Charakterisierung

Gemäß dem erfindungsgemäßen Herstellungsverfahren wurde ein Abbindeverzögerer (Probe 3) durch Umsetzen von Lysin (Probe 1) mit Bernsteinsäureanhydrid (BSA) (Probe 2) hergestellt.

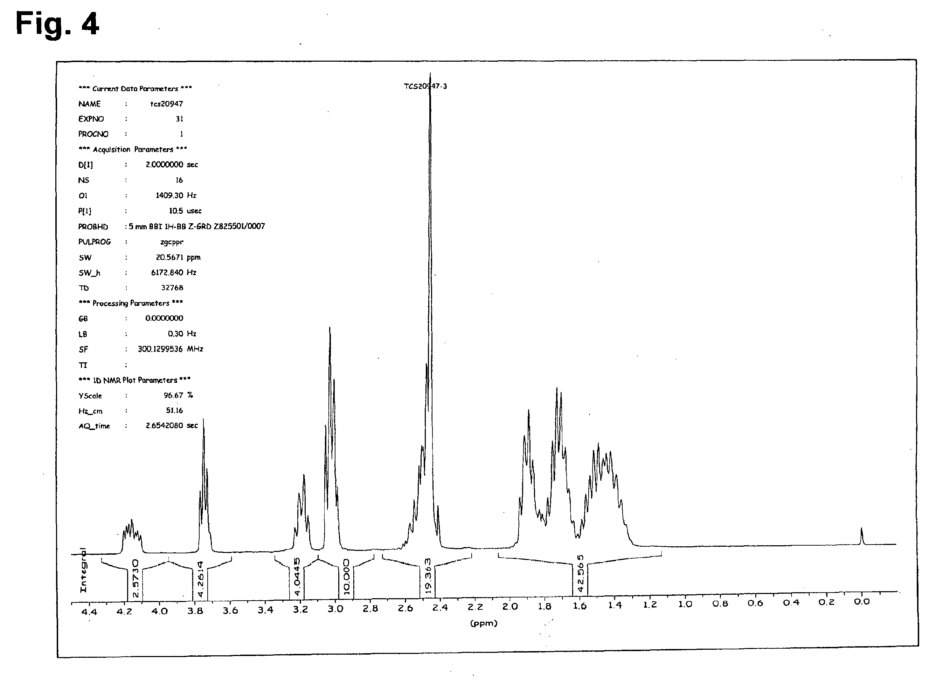

Die untersuchte Probe 3 ist ein chemisches Reaktionsprodukt aus Lysin (50 Gew.-%-ige wässrige Lösung) und Bernsteinsäureanhydrid (Schuppen), welche als Probe 1 bzw. Probe 2 charakterisiert wurde. Die Probe 3 wurde durch Umsetzen einer wässrigen, mit Natronlauge neutralisierten Lösung (Dichte 20 °C = 1,16 g/ml, pH-Wert neutral) aus 1,5 Teilen Edukt a) (Basis Aminosäure Lysin) und 1 Teil Edukt b) (Basis Bernsteinsäureanhydrid) erhalten. Das NMR-Spektrum des Reaktionsprodukts ist in Fig. 4 dargestellt.

### 1. Methoden

Als Referenz- bzw. Kalibriersubstanz für die NMR-Kalibrierung wurde 3-(Trimethylsilyl)-propionsäure-d₄ Na-Salz (TMSP; für NMR Kalibrierung) (Merck, Darmstadt) verwendet. Als Lösungsmittel zur NMR-spektroskopischen Untersuchung wurde Deuteriumoxid mit einem Deuterierungsgrad von 99,9 % von Deutero GmbH, Kastellaun, verwendet.

Die NMR-spektroskopischen Untersuchungen wurden auf einem NMR-Spektrometer Avance 300 (BRUKER, Karlsruhe, D), magnetische Flussdichte 7,05 Tesla, PA BBI-Messkopf; automatischer Probengeber BRUKER B-ACS 120; Computer P IV 1,5 GHz unter MS Windows 2000 Pro und BRUKER XWIN-NMR 3.5 zur Messung; BRUKER Win-NMR 6.0 zur Auswertung, ausgeführt.

Die massenspektroskopischen Untersuchungen werden auf einem Massenspektrometer Finnigan AQA (ThermoQuest, Manchester, GB) im ±ESI Modus, Zuführung LC; HPLC-Anlage SpectraSYSTEM (ThermoFinnigan, San José, CA):
Binäre HPLC-Gradientenpumpe P2000
Entgasungseinheit SCM1000
Autosampler AS3000
UV-Detektor UV2000

Computer PIII 500 MHz unter Windows NT 4.0 und Software Xcalibur 1.2 ausgeführt.

### 1.1 NMR-Spektroskopie

Zur Charakterisierung der Prüfgegenstände wurden ¹H-NMR-Spektren gemessen. Ca. 100 mg (Proben 1 und 3) bzw. ca. 20 mg (Probe 2) wurden in jeweils 1 ml D₂O gelöst.

Die verwendeten NMR-Parameter sind auf jedem Spektrum verzeichnet.

Dabei zeigen
- Fig. 1:: Das Reaktionsschema der Umsetzung von Lysin mit BSA mit bei der Reaktion möglichen Reaktionsprodukten,

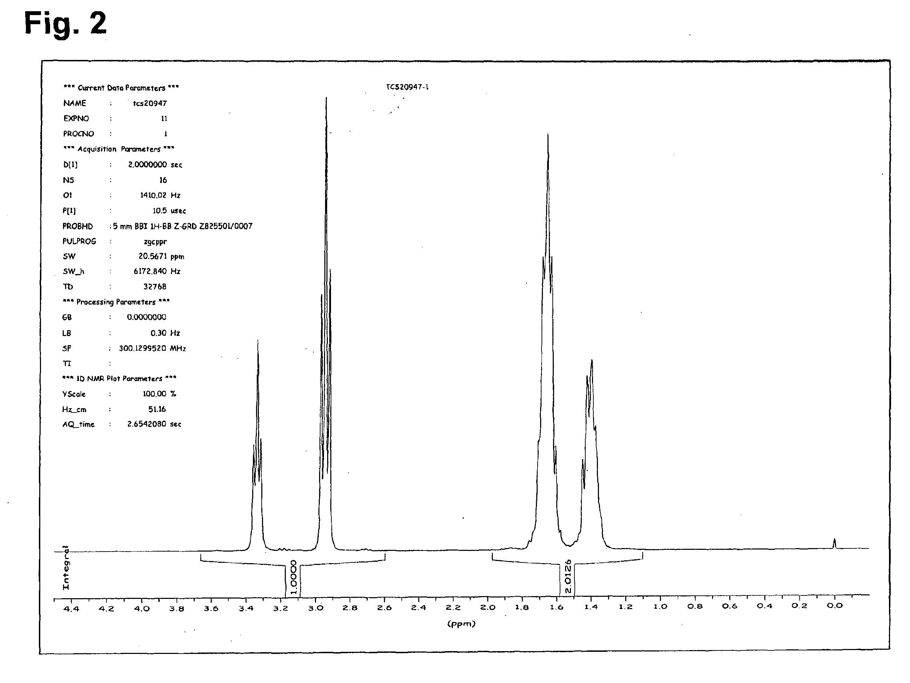

- Fig. 2:: das NMR-Spektrum der Probe 1 (Lysin),

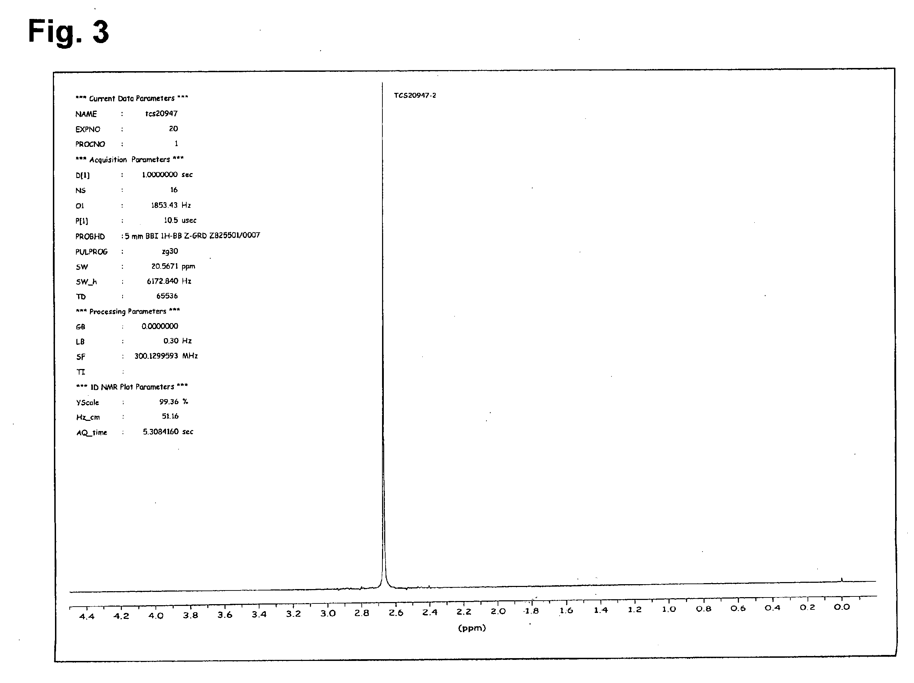

- Fig. 3:: das NMR-Spektrum der Probe 2 (BSA),
- Fig. 4:: Das NMR-Spektrum des Reaktionsproduktes (Probe 3).

### 1.2 Massenspektroskopie

Zur Charakterisierung der Prüfgegenstände Proben 1 und 3 wurden ±ESI-Massenspektren gemessen. Ca. 10 µl der Proben wurden in 1 ml mobiler Phase gelöst und über die LC/MS-Kopplung zugeführt.

| | |
|---|---|
| Mobile Phase: | Methanol/Ameisensäure (100:0,1) |
| Scan-Parameter: | 50-1100 amu in 2,9 sec. |
| an Kapillare | |
| angelegte Spannung: | 4 kV |
| Source voltage: | +50/-10 V |
| Proben-Temperatur: | 300 °C |

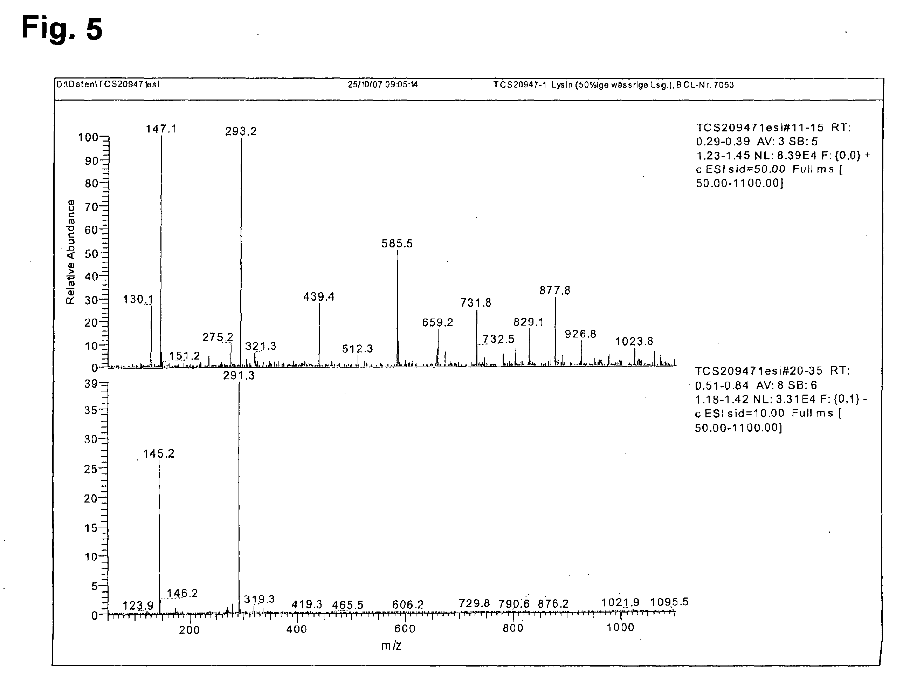

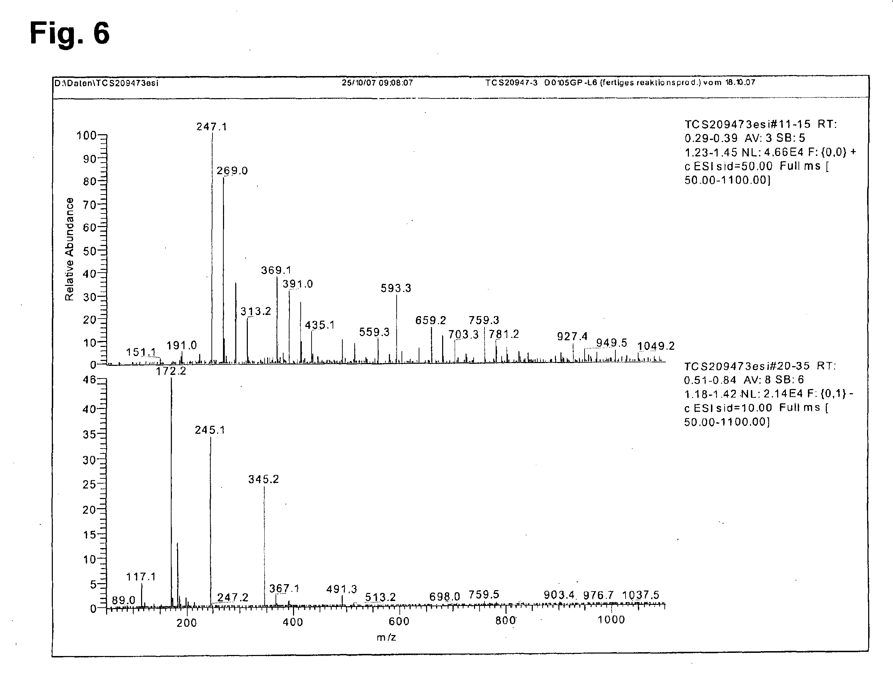

Die beigefügten Massenspektrogramme der Fig. 5 und 6 zeigen
- Fig. 5:: Ein Massenspektrum von Probe 1 (Lysin) mit dazugehöriger Zuordnung der Peaks (Tabelle 1), und
- Fig. 6:: ein Massenspektrum des Reaktionsproduktes (Probe 3), das gemäß Versuch 1 hergestellt wurde, sowie die dazugehörige Zuordnung der Peaks (Tabelle 2).

### 2. Wirkung des Abbindeverzögerers

Die Wirkung der erfindungsgemäßen Abbindeverzögerer wurde anhand von zwei Rezepturen mit der Wirkung von handelsüblichen Verzögerern (Retardan L bzw. Zitronensäure) verglichen. Die Messung erfolgte dabei vom Versteifungsbeginn mit dem Messer-Verfahren DIN EN 13279-2 am Gipsbrei (Wasser-Gips-Wert 0,6, Dosierung 0,01 Gew.-%):

| | |
|---|---|
| Nullwert: | 15 Minuten |
| Retardan L: | 40 Minuten (= handelsüblicher Verzögerer, Calcium-Salz einer polykondensierten Ami- nosäure) |
| Zitronensäure: | 40 Minuten |
| Erfindungsgemäße Rezeptur 1: | 90 Minuten |
| Erfindungsgemäße Rezeptur 2: | 130 Minuten |

Rezeptur 1: Wässrige, mit Natronlauge neutralisierte Lösung (Dichte 20 °C = 1,16 g/ml, pH-Wert = 5), aus 1 Teile Edukt a) (Basis Aminosäure Threonin) und 1 Teil Edukt b) (Basis Bernsteinsäureanhydrid).

Rezeptur 2: Wässrige, mit Natronlauge neutralisierte Lösung (Dichte 20 °C = 1,16 g/ml, pH-Wert neutral), aus 1 Teile Edukt a) (Basis Aminosäure Lysin) und 1,5 Teil Edukt b) (Basis Bernsteinsäureanhydrid).

Bei diesen Vergleichsversuchen werden die überlegenen Verzögerungseigenschaften des erfindungsgemäßen Abbindeverzögerers verdeutlicht. In beiden Fällen konnte eine Verdopplung bzw. eine Verdreifachung der Abbindezeit des Gipses erzielt werden.

**Tabelle 1**

| m/z | Signalzuordnung +ESI |
|---|---|
| 145 | [M-H]⁻ |
| 147 | [M+H]⁺ |
| 291 | [2M-H]⁻ |
| 293 | [2M+H]⁺ |
| 439 | [3M+H]⁺ |
| 585 | [4M+H]⁺ |
| 731 | [5M+H]⁺ |

| | |
|---|---|
| M = m/z 146: Lysin | |

**Tabelle 2**

| m/z | Signalzuordnung +ESI |
|---|---|
| 117 | [M₃-H]⁻ |
| 245 | [M₁-H]⁻ |
| 247 | [M₁+H]⁺ |
| 269 | [M₁+Na]⁺ |
| 291 | [M₁+2Na-H]⁺ |
| 313 | [M₁+3Na-2H]⁺ |
| 345 | [M₂-H]⁻ |
| 369 | [M₂+Na]⁺ |
| 391 | [M₂+2Na-H]⁺ |
| 413 | [M₂+3Na-2H]⁺ |
| 435 | [M₂+4Na-3H]⁺ |
| 593 | [M₁+M2+H]⁺ |

| | |
|---|---|
| M₁ = m/z 246: Lysin + 1x Bernsteinsäureanhydrid M₂ = m/z 346: Lysin + 2x Bernsteinsäureanhydrid M₃ = m/z 118: Bersteinsäure | |

## Patentansprüche

1. Abbindeverzögerer für hydraulisch abbindende Zusammensetzungen, enthaltend mindestens ein zumindest einfaches Addukt und/oder Kondensat, herstellbar durch Reaktion mindestens eines Proteinhydrolysats, einer reinen Aminosäure, Aminosäuregemischen und/oder deren Hydrochloriden mit mindestens einer Mono-, Di-, Oligo- und/oder Polycarbonsäure, die nicht von einer Aminosäure abgeleitet ist und/oder davon abgeleitete Carbonsäurederivate, wobei das Carbonsäurederivat ausgewählt ist aus der Gruppe bestehend aus Carbonsäureanhydriden, Carbonsäurehalogeniden und/oder Carbonsäureaktivestern.

2. Abbindeverzögerer nach Anspruch 1, **dadurch gekennzeichnet, dass** die mindestens eine Aminosäure ausgewählt ist aus der Gruppe bestehend aus Alanin, Arginin, Asparagin, Asparaginsäure, Cystein, Glutamin, Glutaminsäure, Glycin, Histidin, Isoleucin, Leucin, Lysin, Lysinhydrochlorid, Methionin, Phenylalanin, Prolin, Serin, Threonin, Tryptophan, Tyrosin, Valin und/oder Aminobutansäure;
und
die Mono-, Di-, Oligo- und/oder Polycarbonsäure und/oder das Carbonsäurederivat ausgewählt ist aus der Gruppe bestehend aus Oxalsäure, Essigsäure, Proprionsäure, 1,3-Propriondisäure, Butansäure, Bernsteinsäure, Maleinsäure, Fumarsäure, Phthalsäure, Pyromellitsäure, Äpfelsäure, Weinsäure, Zitronensäure und/oder deren Säurehalogenide, Säureanhydride und/oder Aktivester der genannten Verbindungen, bevorzugt Bernsteinsäureanhydrid.

3. Abbindeverzögerer nach einem der vorhergehenden Ansprüche, **dadurch gekennzeichnet, dass** das mindestens eine Addukt und/oder Kondensat der allgemeinen Formel I entspricht
Z-Y-(R³)_{c}-(CHR¹)ₐ-(CHR²)_{b}-Y-Z Formel I
wobei jeweils unabhängig voneinander
R¹ Wasserstoff oder einen linearen oder verzweigten C₁-C₁₂-Alkylrest,
R² -COOX und/oder -SO₃X, mit X = H, Li, Na, K, ½Mg, ½Ca, ½Zn,
R³ einen zweiwertigen aromatischen Rest, der ortho, meta oder parasubstituiert ist und 6 bis 18 Kohlenstoffatome aufweist oder ein Rest der Formel II 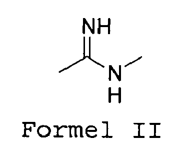 wobei das iminische Kohlenstoffatom (-C=N) an die Gruppierung Y gemäß Formel I gebunden ist,
a 1 bis 12,
b 0 bis 10
c 0 oder 1,
Y NR¹, S oder O, wobei R¹ die oben angegebene Bedeutung hat, sowie
Z -C(=O)-(CHR¹)_{d}-COOX, wobei R¹ und X die oben angegebene Bedeutung besitzen und d 0 bis 12 ist,
bedeuten,
und/oder
eine Mischung darstellt, enthaltend das Addukt und/oder Kondensat der allgemeinen Formel I sowie ein oder beide Addukte und/oder Kondensate gemäß den allgemeinen Formeln III und IV
HY-(R³)_{c}-(CHR¹)ₐ-(CHR²)_{b}-Y-Z Formel III
Z-Y-(R³)_{c}-(CHR¹)ₐ-(CHR²)_{b}-YH Formel IV
wobei R^{1,} R², R³, a, b, c, Y und Z die oben genannte Bedeutung haben.

4. Abbindeverzögerer nach vorhergehendem Anspruch, **dadurch gekennzeichnet, dass** R¹ = H; a = 2-6, insbesondere 4; R² = COOX; b = 1; c = 0; d = 1-6, insbesondere 2 sowie Y = NH ist.

5. Abbindeverzögerer nach einem der vorhergehenden Ansprüche, **dadurch gekennzeichnet, dass** er in wässriger Lösung oder in trockener Pulverform vorliegt, wobei die Konzentration des Abbindeverzögerers in der wässrigen Lösung bevorzugt zwischen 15 bis 50 Gew.-%, weiter bevorzugt zwischen 15 bis 40 Gew.-%, besonders bevorzugt zwischen 30 bis 40 Gew.-% beträgt.

6. Abbindeverzögerer nach einem der vorhergehenden Ansprüche, **dadurch gekennzeichnet, dass** der pH-Wert der wässrigen Lösung zwischen 2 und 13, bevorzugt zwischen 4 und 10, besonders bevorzugt zwischen 6 und 8 liegt.

7. Abbindeverzögerer nach einem der vorhergehenden Ansprüche, **dadurch gekennzeichnet, dass** mindestens ein Zusatzstoff, ausgewählt aus der Gruppe bestehend aus Rheologiehilfsmitteln, Lösemitteln, Entschäumern, Beschleunigern, Füllstoffen, Trockenstoffen, Farbstoffen, Konservierungsmitteln, Rostschutzmitteln, Hydrophobierungsmitteln oder Pigmenten, oder ein Gemisch aus zwei oder mehr davon, enthalten ist.

8. Verfahren zur Herstellung eines Abbindeverzögereres nach einem der vorhergehenden Ansprüche, **dadurch gekennzeichnet, dass**
a) mindestens ein Proteinhydrolysat, eine reine Aminosäure, ein Aminosäuregemisch und/oder deren Hydrochloride, bevorzugt Lysin, Lysinhydrochlorid und/oder Threonin mit
b) mindestens einer Mono-, Di-, Oligo- und/oder Polycarbonsäure, die nicht von einer Aminosäure abgeleitet ist und/oder davon abgeleiteten Carbonsäurederivaten, wobei das Carbonsäurederivat ausgewählt ist aus der Gruppe bestehend aus Carbonsäureanhydriden, Carbonsäurehalogeniden und/oder Carbonsäureaktivestern, bevorzugt Bernsteinsäureanhydrid,
in wässriger Lösung gemischt und zur Reaktion gebracht wird.

9. Verfahren nach vorhergehendem Anspruch, **dadurch gekennzeichnet, dass** zum Reaktionsgemisch mindestens eine Lauge, bevorzugt Natronlauge, Kalilauge, Kalkmilch, Löschkalk und/oder Branntkalk vor, während und/oder nach Mischen der Komponenten a) und b) zugegeben wird.

10. Verfahren nach einem der beiden vorhergehenden Ansprüche, **dadurch gekennzeichnet, dass** das Äquivalenzverhältnis der Edukte a) und b) zwischen 1:10 und 10:1, bevorzugt zwischen 1:3 und 3:1 beträgt, wobei die Äquivalenz des Eduktes a) auf freie -NH₂-Gruppen und die Äquivalenz des Eduktes b) auf freie oder derivatisierte Carbonsäurefunktionalitäten bezogen ist.

11. Verfahren nach einem der Ansprüche 8 bis 10, **dadurch gekennzeichnet, dass** nach abgeschlossener Reaktion eine Aussalzung des Produktes durch Zugabe mindestens einer Alkalie, bevorzugt einer Alkalie ausgewählt aus der Gruppe bestehend aus Calciumhydroxid, Calciumoxid, Kaliumhydroxid und/oder Natriumhydroxid erfolgt.

12. Verfahren nach einem der Ansprüche 8 bis 11, **dadurch gekennzeichnet, dass** nach der Reaktion eine Trocknung des Reaktionsgemisches, bevorzugt eine Sprühtrocknung durchgeführt wird.

13. Verwendung eines Abbindeverzögerers nach einem der Ansprüche 1 bis 7 zur Verzögerung des Abbindens einer hydraulisch abbindenden Zusammensetzung, wobei der Abbindeverzögerer vor, während und/oder nach Anmachen der hydraulischen abbindenden Zusammensetzung dieser zugesetzt wird.

14. Verwendung nach vorhergehendem Anspruch, **dadurch gekennzeichnet, dass** die hydraulisch abbindende Zusammensetzung mindestens eine anorganische Substanz, insbesondere ausgewählt aus der Gruppe bestehend aus Zement, hydraulischer Kalk, Gips-Putze, -Spachtel, -Mörtel, -Estriche und/oder Mischungen hieraus enthält.

15. Verwendung nach einem der beiden vorhergehenden Ansprüche, **dadurch gekennzeichnet, dass** bezogen auf 100 Gew.-% hydraulisch abbindenden Zusammensetzung in trockener Form 0,001 bis 0,5 Gew.-%, bevorzugt 0,001 bis 0,1 Gew.-% des Abbindeverzögerers zugesetzt werden.

## Geänderte Patentansprüche

### Geänderte Patentansprüche gemäss Regel 137(2) EPÜ.

**1.** Gipszusammensetzung enthaltend auf 100 Gew.-% Gips als Trockensubstanz, 0,001 bis 0,5 Gew.-% eines Abbindeverzögerers, bezogen auf die Trockensubstanz, wobei der Abbindeverzögerer mindestens ein zumindest einfaches Addukt und/oder Kondensat, herstellbar durch Reaktion mindestens eines Proteinhydrolysats, einer reinen Aminosäure, Aminosäuregemischen und/oder deren Hydrochloriden mit mindestens einer Mono-, Di-, Oligo- und/oder Polycarbonsäure, die nicht von einer Aminosäure abgeleitet ist und/oder davon abgeleitete Carbonsäurederivate, wobei das Carbonsäurederivat ausgewählt ist aus der Gruppe bestehend aus Carbonsäureanhydriden, Carbonsäurehalogeniden und/oder Carbonsäureaktivestern, enthält.

**2.** Gipszusammensetzung nach Anspruch 1, **dadurch gekennzeichnet, dass** die mindestens eine Aminosäure ausgewählt ist aus der Gruppe bestehend aus Alanin, Arginin, Asparagin, Asparaginsäure, Cystein, Glutamin, Glutaminsäure, Glycin, Histidin, Isoleucin, Leucin, Lysin, Lysinhydrochlorid, Methionin, Phenylalanin, Prolin, Serin, Threonin, Tryptophan, Tyrosin, Valin und/oder Aminobutansäure;
und
die Mono-, Di-, Oligo- und/oder Polycarbonsäure und/oder das Carbonsäurederivat ausgewählt ist aus der Gruppe bestehend aus Oxalsäure, Essigsäure, Proprionsäure, 1,3-Propriondisäure, Butansäure, Bernsteinsäure, Maleinsäure, Fumarsäure, Phthalsäure, Pyromellitsäure, Äpfelsäure, Weinsäure, Zitronensäure und/oder deren Säurehalogenide, Säureanhydride und/oder Aktivester der genannten Verbindungen, bevorzugt Bernsteinsäureanhydrid.

**3.** Gipszusammensetzung nach einem der vorhergehenden Ansprüche, **dadurch gekennzeichnet, dass** das mindestens eine Addukt und/oder Kondensat der allgemeinen Formel I entspricht
Z-Y-(R³)_{c}-(CHR¹)ₐ-(CHR²)_{b}-Y-Z Formel I
wobei jeweils unabhängig voneinander
R¹ Wasserstoff oder einen linearen oder verzweigten C₁-C₁₂-Alkylrest,
R² -COOX und/oder -SO₃X, mit X = H, Li, Na, K, ½Mg, ½Ca, ½Zn,
R³ einen zweiwertigen aromatischen Rest, der ortho, meta oder parasubstituiert ist und 6 bis 18 Kohlenstoffatome aufweist oder ein Rest der Formel II 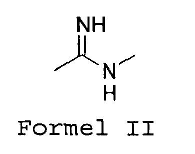 wobei das iminische Kohlenstoffatom (-C=N) an die Gruppierung Y gemäß Formel I gebunden ist,
a 1 bis 12,
b 0 bis 10
c 0 oder 1,
Y NR¹, S oder O, wobei R¹ die oben angegebene Bedeutung hat, sowie
Z -C(=O)-(CHR¹)_{d}-COOX, wobei R¹ und X die oben angegebene Bedeutung besitzen und d 0 bis 12 ist,
bedeuten,
und/oder
eine Mischung darstellt, enthaltend das Addukt und/oder Kondensat der allgemeinen Formel I sowie ein oder beide Addukte und/oder Kondensate gemäß den allgemeinen Formeln III und IV
HY-(R³)_{c}-(CHR¹)ₐ-(CHR²)_{b}-Y-Z Formel III
Z-Y-(R³)_{c}-(CHR¹)ₐ-(CHR²)_{b}-YH Formel IV
wobei R¹, R², R³, a, b, c, Y und Z die oben genannte Bedeutung haben.

**4.** Gipszusammensetzung nach vorhergehendem Anspruch, **dadurch gekennzeichnet, dass** R¹ = H; a = 2-6, insbesondere 4; R² = COOX; b = 1; c = 0; d = 1-6, insbesondere 2 sowie Y = NH ist.

**5.** Gipszusammensetzung nach einem der vorhergehenden Ansprüche, **dadurch gekennzeichnet, dass** der Abbindeverzögerer in wässriger Lösung oder in trockener Pulverform vorliegt, wobei die Konzentration des Abbindeverzögerers in der wässrigen Lösung bevorzugt zwischen 15 bis 50 Gew.-%, weiter bevorzugt zwischen 15 bis 40 Gew.-%, besonders bevorzugt zwischen 30 bis 40 Gew.-% beträgt.

**6.** Gipszusammensetzung nach einem der vorhergehenden Ansprüche, **dadurch gekennzeichnet, dass** der pH-Wert der wässrigen Lösung zwischen 2 und 13, bevorzugt zwischen 4 und 10, besonders bevorzugt zwischen 6 und 8 liegt.

**7.** Gipszusammensetzung nach einem der vorhergehenden Ansprüche, **dadurch gekennzeichnet, dass** im Abbindeverzögerer mindestens ein Zusatzstoff, ausgewählt aus der Gruppe bestehend aus Rheologiehilfsmitteln, Lösemitteln, Entschäumern, Beschleunigern, Füllstoffen, Trockenstoffen, Farbstoffen, Konservierungsmitteln, Rostschutzmitteln, Hydrophobierungsmitteln oder Pigmenten, oder ein Gemisch aus zwei oder mehr davon, enthalten ist.

**8.** Verfahren zur Herstellung einer Gipszusammensetzung nach einem der Ansprüche 1 bis 7, **dadurch gekennzeichnet, dass** der Abbindeverzögerer vor, während und/oder nach Anmachen der Gipszusammensetzung zugesetzt wird.

**9.** Verfahren nach Anspruch 8, **dadurch gekennzeichnet, dass** der Abbindeverzögerer wie folgt hergestellt wird:
a) Mindestens ein Proteinhydrolysat, eine reine Aminosäure, ein Aminosäuregemisch und/oder deren Hydrochloride, bevorzugt Lysin, Lysinhydrochlorid und/oder Threonin wird mit
b) mindestens einer Mono-, Di-, Oligo- und/oder Polycarbonsäure, die nicht von einer Aminosäure abgeleitet ist und/oder davon abgeleiteten Carbonsäurederivaten, wobei das Carbonsäurederivat ausgewählt ist aus der Gruppe bestehend aus Carbonsäureanhydriden, Carbonsäurehalogeniden und/oder Carbonsäureaktivestern, bevorzugt Bernsteinsäureanhydrid,
in wässriger Lösung gemischt und zur Reaktion gebracht.

**10.** Verfahren nach Anspruch 9, **dadurch gekennzeichnet, dass** zum Reaktionsgemisch mindestens eine Lauge, bevorzugt Natronlauge, Kalilauge, Kalkmilch, Löschkalk und/oder Branntkalk vor, während und/oder nach Mischen der Komponenten a) und b) zugegeben wird.

**11.** Verfahren nach einem der beiden vorhergehenden Ansprüche, **dadurch gekennzeichnet, dass** das Äquivalenzverhältnis der Edukte a) und b) zwischen 1:10 und 10:1, bevorzugt zwischen 1:3 und 3:1 beträgt, wobei die Äquivalenz des Eduktes a) auf freie -NH₂-Gruppen und die Äquivalenz des Eduktes b) auf freie oder derivatisierte Carbonsäurefunktionalitäten bezogen ist.

**12.** Verfahren nach einem der Ansprüche 9 bis 11, **dadurch gekennzeichnet, dass** nach abgeschlossener Reaktion eine Aussalzung des Produktes durch Zugabe mindestens einer Alkalie, bevorzugt einer Alkalie ausgewählt aus der Gruppe bestehend aus Calciumhydroxid, Calciumoxid, Kaliumhydroxid und/oder Natriumhydroxid erfolgt.

**13.** Verfahren nach einem der Ansprüche 9 bis 12, **dadurch gekennzeichnet, dass** nach der Reaktion eine Trocknung des Reaktionsgemisches, bevorzugt eine Sprühtrocknung durchgeführt wird.

**14.** Verfahren nach einem der Ansprüche 8 bis 13, **dadurch gekennzeichnet, dass** der Gips ausgewählt ist aus der Gruppe Gips-Putze, -Spachtel, -Mörtel, -Estriche und/oder Mischungen hieraus.

**15.** Verfahren nach einem der Ansprüche 8 bis 14, **dadurch gekennzeichnet, dass** bezogen auf 100 Gew.-% Gips in trockener Form 0,001 bis 0,5 Gew.-%, bevorzugt 0,001 bis 0,1 Gew.-% des Abbindeverzögerers zugesetzt werden.
